# EUROPÄISCHE PATENTSCHRIFT

(11) **EP 2 782 817 B1**
(45) Veröffentlichungstag und Bekanntmachung des Hinweises auf die Patenterteilung: **23.03.2016**
(21) Anmeldenummer: 12787026.9
(22) Anmeldetag: 19.11.2012
(51) Int. Cl.: B62J 9/00, B62M 6/90

(54) **ENERGIESPEICHERVORRICHTUNG ZUR BEFESTIGUNG AN EINEM FAHRRADRAHMEN**
ENERGY STORAGE DEVICE FOR ATTACHMENT TO A BICYCLE FRAME
DISPOSITIF DE STOCKAGE D'ÉNERGIE À FIXER SUR UN CADRE DE BICYLETTE

(30) Priorität: 25.11.2011 DE 102011055719
(43) Veröffentlichungstag der Anmeldung: 01.10.2014
(73) Patentinhaber: Lang, Günter, 73249 Wernau (DE)
(72) Erfinder: Lang, Günter, 73249 Wernau (DE)
(74) Vertreter: Rüger, Barthelt & Abel
(86) Internationale Anmeldenummer: PCT/EP2012/072946
(87) Internationale Veröffentlichungsnummer: WO 2013/076027

(56) Entgegenhaltungen:
- DE-B- 1 200 155
- DE-U1-202009 011 118
- DE-U1-202010 010 522
- DE-U1-202011 001 232
- NL-A- 213 242

## Beschreibung

Die Erfindung betrifft eine Energiespeichervorrichtung zur Befestigung an einem Fahrradrahmen. Die Energiespeichervorrichtung dient insbesondere zur Energieversorgung eines elektrischen Antriebs oder Hilfsantriebs des Fahrrads. Die Energiespeichervorrichtung weist hierfür wenigstens einen insbesondere wieder aufladbaren Energiespeicher zur Bereitstellung von elektrischer Energie auf.

Eine Energiespeichervorrichtung ist beispielsweise aus DE 20 2010 010 522 U1, die als nächstliegender Stand der Technik angesehen wird, bekannt. Zur Befestigung am Fahrradrahmen weist die Energiespeichervorrichtung ein Gehäuse mit einem hervorspringenden Steg auf. Der Steg wird eine zugeordnete nutartige Vertiefung eines Rahmenrohrs des Fahrzeugrahmens eingesteckt. Zwar kann auf diese Weise einfache Lagerung des einen oder mehrere Energiespeicher aufweisenden Gehäuses am Fahrradrahmen erreicht werden. Jedoch muss der Fahrradrahmen hierfür eine angepasste Form aufweisen. Die Energiespeicheranordnung ist daher nur für besonders ausgestaltete Fahrradrahmen verwendbar. Eine Nachrüstung von herkömmlichen Fahrrädern mit einem elektrischen Hilfsantrieb und einer Energiespeichervorrichtung ist auf diese Weise nicht möglich.

In DE 20 2011 001 232 U1 wird vorgeschlagen, das Gehäuse der Energiespeicheranordnungsvorrichtung zu befestigen. Das Haltemittel weist zwei Befestigungsklammern auf, die ein Rohr des Fahrradrahmens umgreifen. Das Gehäuse der Energiespeichervorrichtung kann an dem über die Befestigungsklammern am Fahrradrahmen befestigen Haltemittel angebracht werden.

Ferner offenbart DE 20 2009 011 118 U1 eine Energiespeichervorrichtung zur Befestigung an einem Fahrradrahmen. Die Energiespeichervorrichtung weist eine dreieckartige Gehäuseform auf, so dass sie ihm Rahmendreieck eines Fahrradrahmens angeordnet werden kann. Im oberen Teil weist das Gehäuse eine zylindrische Öffnung auf, durch die im montierten Zustand das obere Rahmenrohr des Rahmendreiecks verläuft. Das Gehäuse ist zweiteilig ausgeführt, wobei die zylindrische Öffnung entlang ihrer gesamten axialen Länge an einer Stelle durch einen Schlitz geöffnet ist. Dieser Schlitz kann zur Montage gegen die elastische Kraft des Gehäuses aufgeweitet und über die obere Rahmenstange gesteckt werden. Nach dem Aufstecken auf die obere Rahmenstange federn die beiden Gehäuseteile wieder aufeinander zu, so dass die geschlitzte zylindrische Öffnung an dem oberen Rahmenrohr festgeklemmt ist. Ein Akkumulator und/oder eine Steuereinheit sind dann im Rahmendreieck zwischen den Rahmenrohren angeordnet.

Diese Ausgestaltung hat den Nachteil, dass sie in den Raum zwischen den Rahmenrohren des Rahmendreiecks des Fahrradrahmens eingreift. Häufig sind dort Halteeinrichtungen für Trinkflaschen, Feder-Dämpfer-Einheiten von gefederten Fahrrädern oder ähnliches montiert. In einem solchen Fall müssten diese erst demontiert werden, bevor die Energiespeichervorrichtung gemäß DE 20 2009 011 118 U1 am Fahrradrahmen angebracht werden könnte.

Ausgehend von diesen bekannten Vorrichtungen kann es als eine Aufgabe der vorliegenden Erfindung angesehen werden, eine Energiespeichervorrichtung zur vorzugsweise werkzeuglosen Befestigung an einem Fahrradrahmen zu schaffen, die einerseits beim Fahren den Fahrer nicht behindert und andererseits auch für das problemlose Nachrüsten herkömmlicher Fahrräder geeignet ist.

Diese Aufgabe wird durch eine Energiespeichervorrichtung mit den Merkmalen des Patentanspruches 1 gelöst.

Die erfindungsgemäße Energiespeichervorrichtung weist ein Gehäuse auf, in dem wenigstens ein Energiespeicher zu Bereitstellung von elektrischer Energie angeordnet ist. Am Gehäuse ist wenigstens ein vom außen zugänglicher elektrischer Anschluss vorhanden. Dieser Anschluss dient zum Einen zum Anschließen eines elektrischen Verbrauchers, insbesondere eines elektrischen Antriebs an den Energiespeicher. Zum Anderen kann dieser Anschluss vorzugsweise auch zum Aufladen des elektrischen Energiespeichers verwendet werden. Bei dem wenigstens einen elektrischen Energiespeicher handelt es sich vorzugsweise um einen wiederaufladbaren Akkumulator.

Das Gehäuse weist zwei hohle Gehäuseteile auf, die über einen Verbindungsteil insbesondere starr miteinander verbunden sind. Die beiden Gehäuseteile dienen zur Aufnahme des wenigstens einen Energiespeichers. Vorzugsweise sind in jedem der beiden Gehäuseteile mehrere Energiespeicher angeordnet. Zwischen den beiden Gehäuseteilen ist ein Aufnahmeraum vorhanden. Der Abstand zwischen den beiden Gehäuseteilen ist durch den Verbindungsteil vorgegeben und stellt die Breite des Aufnahmeraums dar. Die Breite des Aufnahmeraums ist zumindest so groß, wie die Breite des aufzunehmenden Rohrabschnitts in am Fahrradrahmen montierten Zustand.

Einer derartigen Ausgestaltung des Gehäuses kann die Energiespeichervorrichtung einfach von oben über das obere Rahmenrohr des Fahrradrahmens gesteckt werden. Der Verbindungsteil liegt dann vorzugsweise nur an einer Stelle auf dem oberen Rahmenrohr auf und die beiden Gehäuseteile erstrecken sich zu beiden Seiten des oberen Rahmenröhrs bzw. des Fahrradrahmens vom Verbindungsteil weg nach unten. Die beiden Gehäuseteile ragen nicht in das Rahmendreieck bzw. in den Raum zwischen den Rahmenrohren des Fahrradrahmens hinein. Die beiden Gehäuseteile befinden sich insbesondere außerhalb des Raumes zwischen zwei parallelen Ebenen, deren Abstand der Dicke der Rahmenrohre des Fahrradrahmens entspricht und zwischen denen der Fahrradrahmen angeordnet ist. Eine dort vorhandene Halteeinrichtung für eine Trinkflasche, eine Feder-Dämpfer-Einrichtung des Fahrrades oder ähnliches behindert daher das Anbringen der Energiespeichervorrichtung nicht. Auch ist es nicht erforderlich, die Gehäuseform der Energiespeichervorrichtung an die Fahrradrahmenform anzupassen. Die Energiespeichervorrichtung eignet sich für die verschiedensten Rahmenbauweisen und Rahmengrößen eines Fahrrades. Der Verbindungsteil stützt sich vorzugsweise an einer Abstützstelle oben auf dem oberen Rahmenrohr ab und ist an einer Befestigungsstelle lösbar mit dem Fahrradrahmen verbunden, insbesondere mit dem Sattelstützrohr des Fahrradrahmens. Zwischen der Abstützstelle und der Befestigungsstelle kann sich der Verbindungsteil frei tragend mit Abstand zum Fahrradrahmen erstrecken.

Vorzugsweise durchgreift sowohl das obere Rahmenrohr als auch ein schräg zum oberen Rahmenrohr und unterhalb desselben verlaufendes unteres Rahmenrohr den Aufnahmeraum, an dem sich das Gehäuse zu Vermeidung einer Schwenkbewegung um eine Längsachse abstützt. Das Gehäuse ist vorzugsweise an seinem hinteren Ende an einer Stelle am Fahrzeugrahmen befestigt, die sich insbesondere oberhalb des oberen Rahmenrohrs befindet. An einer weiteren Stelle kann das Gehäuse auf dem oberen Rahmenrohr aufliegen. Das Gehäuse wird daher sozusagen reitend ähnlich wie eine Satteltasche oberhalb des oberen Rahmenrohrs des Fahrradrahmens gelagert. Die beiden Gehäuseteile werden durch den Verbindungsteil auf Abstand gehalten, so dass sie im montierten Zustand nicht in das Rahmendreieck des Fahrradrahmens eingreifen.

Es ist vorteilhaft, wenn die beiden Gehäuseteile eine identische Form und/oder eine identische Größe aufweisen. Insbesondere ist das Gehäuse bezüglich einer Längsmittelebene durch den Aufnahmeraum symmetrisch ausgeführt. Für die beiden Gehäuseteile können daher baugleiche Teile verwendet werden. Vorzugsweise sind beide Gehäuseteile gleich schwer, so dass die Balance des Fahrrades beim Fahren nicht gestört wird.

Die beiden Gehäuseteile können auch längsverschiebbar am Verbindungsteil gelagert sein.

In jedem Gehäuseteil sind bei einer bevorzugten Ausführung mehrere Energiespeicher angeordnet. Insbesondere können alle Energiespeicher identisch ausgeführt sein. Beim bevorzugten Ausführungsbeispiel ist jeder Energiespeicher durch eine wiederaufladbare Akkumulatorzelle ausgeführt. Die Energiespeicher können elektrisch in Reihe oder parallel zueinander geschaltet sein. Auch Kombinationen von Reihen- und Parallelschaltung sind möglich. Durch die Reihenschaltung mehrerer Energiespeicher erhöht sich die für einen elektrischen Verbraucher zur Verfügung gestellte Ladungsspeichervermögen bzw. das bei einer gegebenen elektrischen Spannung bereitgestellte Energiespeichervermögen. Dadurch kann die Betriebsdauer des elektrischen Verbrauchers verlängert werden.

Vorzugsweise weist jedes Gehäuseteil zwei miteinander verbundene Gehäuseschalen auf. Jede Gehäuseschale kann beispielsweise einen ringsumlaufenden Rand mit einer Anlagefläche aufweisen, wobei die beiden ein Gehäuseteil bildenden Gehäuseschalen an den einender zugewandten Anlageflächen aneinander anliegen. Die beiden Gehäuseschalen definieren einen Hohlraum, in dem der wenigstens eine Energiespeicher angeordnet ist. Die beiden Gehäuseteile bzw. die beiden Gehäuseschalen eines Gehäuseteils können aus einem harten Kunststoffmaterial hergestellt sein, um den wenigstens einen Energiespeicher bei einem Unfall oder einem Sturz vor einer Beschädigung zu schützen. Alternativ können die beiden Gehäuseteile auch aus Metall oder einem Verbundwerkstoff hergestellt sein.

Die Gehäuseschalen sind insbesondere lösbar miteinander verbunden, z.B. über mehrere Verschlussstücke. Am Rand der Gehäuseschalen kann auf der der Anlagefläche entgegen gesetzten Seite abschnittsweise ein Flansch vorhanden sein. Vorzugsweise weist jedes Verschlussstück eine Verschlussnut auf, deren Nutöffnung schmaler ist als der sich daran anschließende Nutkanal, in dem die beiden Flansche der beiden Gehäuseschalen bei hergestellter Verbindung angeordnet sind. Es ergibt sich eine sehr einfach herzustellende und zu lösende Verbindung zwischen den Gehäuseschalen, die auch ohne Werkzeug hergestellt und gelöst werden kann.

Bei einer bevorzugten Ausführungsform weist der Verbindungsteil zwei parallel zueinander in Längsrichtung verlaufende Längsnuten auf, die jeweils eine Nutöffnung aufweisen, die schmaler ist als der sich daran anschließende Nutkanal. Wenigstens ein Verschlussstück kann auf der dem Gehäuseteil abgewandten Seite ein Haltevorsprung aufweisen, der bei hergestellter Verbindung mit dem Verbindungsteil in eine der Längsnuten eingreift. Vorzugsweise weist der Haltevorsprung einen mit dem Verschlussstück verbundenen ersten Steg und einen auf lediglich einer Seite vom ersten Steg weg ragenden zweiten Steg auf. Bei dieser Anordnung ist es möglich, ein Gehäuseteil durch eine Schwenkbewegung um eine parallel zur Längsnut verlaufende Schwenkachse vom Verbindungsteil zu lösen. Der Verbindungsteil kann somit zum Abnehmen des Gehäuseteils am Fahrrad befestigt bleiben.

Bei einer Ausführungsform kann der Verbindungsteil an zwei Stellen und insbesondere ausschließlich an diesen beiden Stellen mit dem Fahrrad verbunden sein. Beispielsweise liegt er mittels einer Abstützeinrichtung an einer ersten Stelle auf einem Rahmenrohr des Fahrradrahmens auf und ist an einer zweiten Stelle mittels einer Befestigungseinrichtung oberhalb des oberen Rahmenrohrs des Fahrradrahmens beispielsweise an einem Sattelstützrohr und/oder an einer im Sattelstützrohr aufgenommenen Sattelstütze befestigt.

Der Verbindungsteil ist vorzugsweise als Platte ausgeführt. Bei einer bevorzugten Ausführungsform dient er ausschließlich zur Verbindung der beiden Gehäuseteile miteinander und zur Befestigung am Fahrradrahmen. Im Verbindungsteil ist kein Energiespeicher angeordnet. Bei einer einfachen Ausführungsform kann der Verbindungsteil als massive Kunststoffplatte ausgeführt sein. Das Gehäuse hat vorzugsweise eine U-Form, wobei die beiden Gehäuseteile in etwa parallel zueinander mit Abstand angeordnet und an der in Montagelager oberen Seite durch den Verbindungsteil miteinander verbunden sind, der sozusagen einen Querschenkel zwischen den beiden Gehäuseteilen bildet.

Der elektrische Anschluss kann bei einer bevorzugten Ausführungsform durch wenigstens ein aus dem Gehäuse herausgeführtes Anschlusskabel gebildet sein. Vorzugsweise ist zumindest ein Anschlusskabel aus jedem Gehäuseteil herausgeführt, insbesondere an einer der beiden Stirnseiten des Gehäuses. Die Stirnseiten des Gehäuses weisen im montierten Zustand nach vorne bzw. nach hinten. Durch die Anordnung des elektrischen Anschlusses bzw. des elektrischen Anschlusskabels an einer der beiden Stirnseiten ist der elektrische Anschluss problemlos zugänglich und kann mit dem elektrischen Antrieb und insbesondere einer Steuereinheit des elektrischen Antriebs und/oder dem Elektromotor des elektrischen Antriebs verbunden werden.

Vorteilhafte Ausgestaltungen der Erfindung ergeben sich aus den abhängigen Patentansprüchen sowie der Beschreibung. Die Beschreibung beschränkt sich auf wesentliche Merkmale der Erfindung sowie sonstiger Gegebenheiten. Die Zeichnung ist ergänzend heranzuziehen. Es zeigen:
Figur 1 ein Ausführungsbeispiel der Energiespeichervorrichtung in schematischer perspektivischer Darstellung,
Figur 2 das Ausführungsbeispiel der Energiespeichervorrichtung nach Figur 1 in einer Rückansicht durch den Aufnahmeraum zwischen den beiden Gehäuseteilen,
Figur 3 ein abgewandeltes Ausführungsbeispiel der Energiespeichervorrichtung in einer Rückansicht durch den Aufnahmeraum zwischen den beiden Gehäuseteilen,
Figur 4 eine Energiespeichervorrichtung gemäß der Figuren 1 bis 3 in an einem Fahrradrahmen montierten Zustand in schematischer Seitenansicht,
Figur 5 eine schematische Schnittdarstellung einer Abstützeinrichtung, mit der sich ein Verbindungsteil der Energiespeichervorrichtung an einem Rahmenrohr eines Fahrradrahmens abstützt,
Figuren 6 und 7 jeweils eine schematische Darstellung einer Befestigungseinrichtung zur Befestigung eines Verbindungsteils der Energiespeichervorrichtung am Fahrrad und
Figur 8 eine schematische Darstellung eines Anschlagelements zur Sicherung eines Gehäuseteils der Energiespeichervorrichtung an einem Verbindungsteil gegen ein Verschieben in Längsrichtung.

Die vorliegende Erfindung betrifft eine Energiespeichervorrichtung 10, wie sie in der Zeichnung dargestellt ist. Die Energiespeichervorrichtung 10 ist dazu vorgesehen und eingerichtet, an einem Fahrradrahmen 11 lösbar und beim Ausführungsbeispiel werkzeuglos befestigt zu werden. Die Energiespeichervorrichtung 10 weist wenigstens einen und beim Ausführungsbeispiel mehrere wiederaufladbare Energiespeicher 12 auf, die beim Ausführungsbeispiel von Akkumulatorzellen 13 gebildet sind. Die wiederaufladbaren Energiespeicher 12 dienen zur Bereitstellung von elektrischer Energie für einen elektrischen Verbraucher, beispielsweise einen elektrischen Antrieb oder Hilfsantrieb für das Fahrrad.

Die Energiespeichervorrichtung 10 weist ein Gehäuse 18 auf, in dem die Energiespeicher 12 angeordnet sind. Zur Aufnahme der Energiespeicher 12 sind zwei identisch ausgeführte Gehäuseteile 19 vorhanden. Jeder Gehäuseteil 19 weist zwei aneinander anliegende Gehäuseschalen 20 auf. Die beiden Gehäuseschalen 20 eines Gehäuseteils 19 sind beim Ausführungsbeispiel lösbar miteinander verbunden. Dies kann beispielsweise durch eine kraft- und/oder formschlüssige Verbindung mithilfe von Verschlussstücken 21 erfolgen. Auf jeder geraden Seite eines Gehäuseteils 19 ist wenigstens ein Verschlussstück 21 vorhanden. In der Zeichnung wurden der Übersichtlichkeit halber nicht alle Verschlussstücke 21 dargestellt. Benachbarte Verschlussstücke 21 können aneinander anliegen oder mit Abstand zueinander angeordnet sein.

Jede Gehäuseschale 20 weist einen ringsumlaufenden Rand 22 auf. Auf den einander zugewandten Seiten der beiden Gehäuseschalen 20 ist an jedem Rand eine Anlagefläche 23 vorgesehen, die bei hergestellter Verbindung zwischen den beiden Gehäuseschalen 20 aneinander anliegen. Im Bereich der beiden Anlageflächen 23 kann ein ringsumlaufendes Dichtungselement zwischen die beiden Gehäuseschalen 20 eingelegt sein, um das Eindringen von Wasser oder Feuchtigkeit in den Gehäuseteil 19 zu vermeiden.

Auf der seiner Anlagefläche 23 entgegengesetzten Seite weist der Rand 22 einer Gehäuseschale 20 abschnittsweise einen Flansch 24 auf, der quer von der Anlagefläche 23 wegragt. Im Bereich der Ecken jeder Gehäuseschale 20 ist der Rand 22 ohne Flansch ausgeführt. Liegen die beiden Gehäuseschalen 20 eines Gehäuseteils 19 aneinander an, so bilden die beiden Ränder 22 sowie die beiden Flansche 24 gemeinsam ein T-förmiges Schließelement 25. An den vier Seiten jedes Gehäuseteils 19 kann auf diese Weise ein vorzugsweise durchgehendes Schließelement 25 gebildet werden. Jedes Schließelement 25 ist über wenigstens ein zugeordnetes Verschlussstück 21 kraft- und/oder formschlüssig zusammengehalten, wodurch die beiden Gehäuseschalen 20 gegeneinander gedrückt werden.

Zu diesem Zweck weist das Verschlussstück 21 eine Verschlussnut 21a mit einer schlitzförmigen Nutöffnung 21b auf. Die Verschlussnut 21a ist in einen quaderförmigen Teil des Verschlussstücks 21 eingebracht und durchsetzt das Verschlussstück 21 vollständig. Hat das Verschlussstück 21 nur die Funktion die Gehäuseschalen 20 aneinander zu sichern, bildet der quaderförmige Teil das Verschlussstück 21. Die Nutöffnung 21b der Verschlussnut 21a mündet in einen Nutkanal 21c. Die Nutöffnung 21b ist im Querschnitt der Verschlussnut 21a betrachtet schmaler als der Nutkanal 21c. Der Nutkanal 21c dient zur Aufnahme eines zugeordneten Abschnitts der beiden Flansche 24, während die Nutöffnung 21b zur Aufnahme des zugeordneten Abschnitts der beiden Ränder 22 dient. Mithin weist die Verschlussnut 21a einen T-förmigen Querschnitt auf. Bei hergestellter Verbindung mit einem Gehäuseteil 19 umgreift das Verschlussstück 21 die beiden zugeordneten Abschnitte der Flansche 24 der beiden Gehäuseschalen 20 und drückt diese gegeneinander. Da die Eckbereiche der beiden Gehäuseschalen 20 flanschfrei sind, können die Verschlussstücke 21 von den Eckbereichen her auf die Flansche 24 aufgeschoben werden, um die beiden Gehäuseschalen 20 gegeneinander zu sichern. Der Gehäuseteil 19 lässt sich mithin werkzeugfrei verschließen bzw. öffnen.

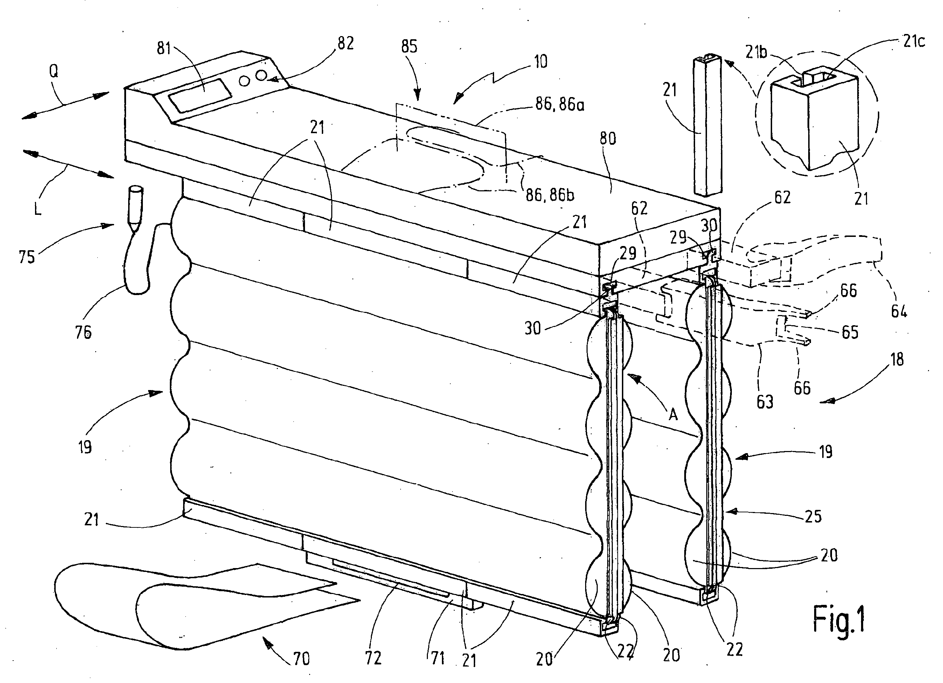

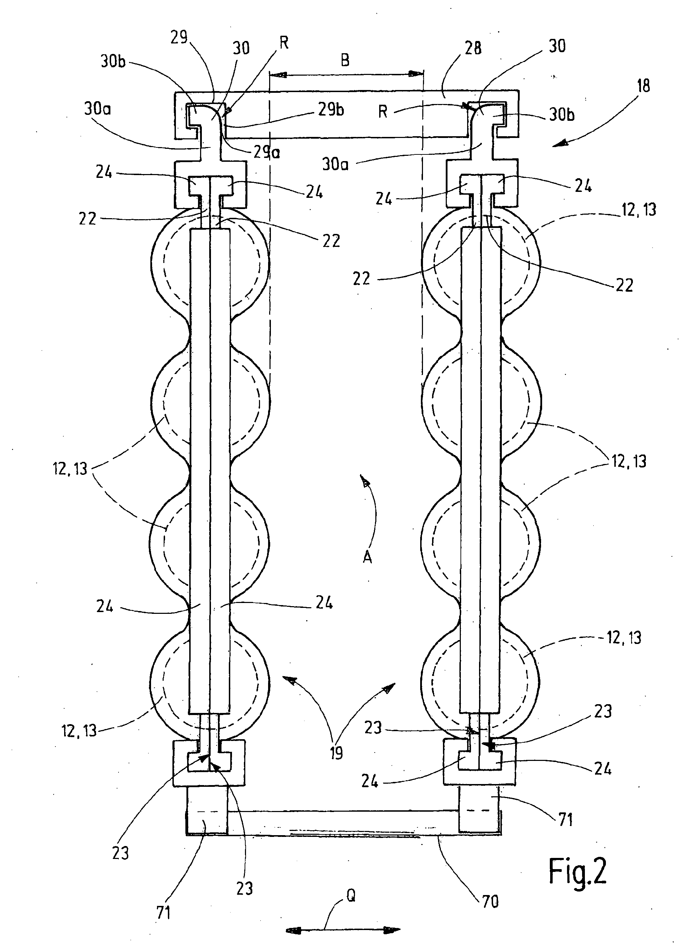

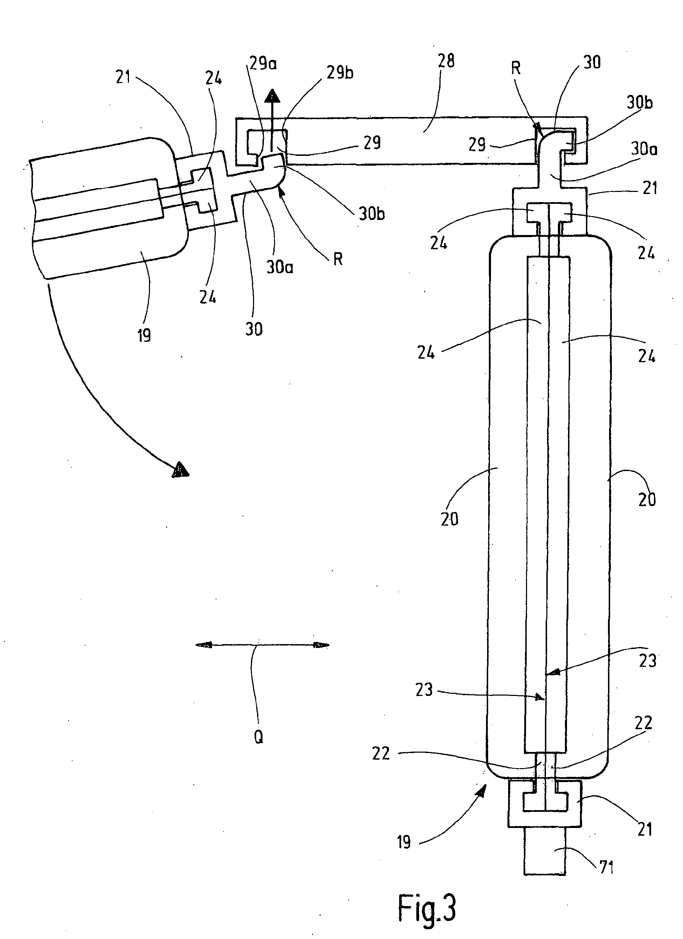

Die beiden Gehäuseschalen 20 umschließen einen Hohlraum im Inneren jedes Gehäuseteils 19. In diesem Hohlraum, der beispielsgemäß in mehrere Kammern 26 unterteilt sein kann, sind die Akkumulatorzellen 13 im Wesentlichen unbeweglich gegenüber dem zugeordneten Gehäuseteil 19 gelagert. Zu diesem Zweck sind die Kammern 26 eines Gehäuseteils 19 an die Kontur der Akkumulatorzelle angepasst. Beim Ausführungsbeispiel nach den Figuren 1 und 2 haben die Akkumulatorzellen 13 eine zylindrische Form, so dass auch die Kammern 26 in etwa zylindrisch ausgeführt sind. Zwischen zwei benachbarten Kammern 26 verjüngt sich der Gehäuseteil 19. Dadurch erhält der Gehäuseteil 19 eine wellenartige Außenfläche, die im Bereich der Kammern 26 jeweils eine konvexe Auswölbung und zwischen zwei benachbarten Kammern 26 eine konkave Einbuchtung aufweist. Beim Ausführungsbeispiel nach Figur 3 sind die Außenflächen des Gehäuseteils 19 im wesentlichen eben ausgeführt. Bei der Gestaltung der Form der Gehäuseschalen 20 und der Gehäuseteile 19 sind verschiedene Abwandlungen möglich. Auf diese Weise lässt sich die Form der Gehäuseschalen 20 bzw. des Gehäuseteils 19 an die Form der in den Kammern 26 aufgenommenen Energiespeicher 12 anpassen, um möglichst wenig Material zu verwenden und ein geringes Gewicht des Gehäuses 18 zu erreichen. Alle Kammern 26 eines Gehäuseteils 19 bilden den Hohlraum des Gehäuseteils 19.

Das Gehäuse 18 weist einen Verbindungsteil 28 auf, der beim Ausführungsbeispiel durch eine Platte gebildet ist. Der Verbindungsteil 28 ist aus einem starren Material hergestellt und bestimmt den Abstand zwischen den beiden Gehäuseteilen 19 in eine Querrichtung Q rechtwinklig zu einer Längsrichtung L.

In den Verbindungsteil 28 sind zwei parallel zueinander in Längsrichtung L verlaufende Längsnuten 29 eingebracht. Die Längsnuten 29 dienen dazu, die beiden Gehäuseteile 19 am Verbindungsteil 28 lösbar zu befestigen. Die Längsnuten 29 sind in Längsrichtung L gesehen zumindest an einer Querseite des Verbindungsteils 28 offen. Beim Ausführungsbeispiel erstrecken sich die Längsnuten 29 vollständig in Längsrichtung L durch den Verbindungsteil 28 hindurch. Jede Längsnut 29 weist eine schlitzförmige Nutöffnung 29a sowie einen sich unmittelbar daran anschließenden Nutkanal 29b auf. Im Querschnitt betrachtet ist die Nutöffnung 29a schmaler als der Nutkanal 29b. Die Längsnut 29 erhält dadurch eine T-förmige oder eine L-förmige Gestalt. Dies hängt davon ab, ob der gegenüber der Nutöffnung 29a der Längsnut 29 in Querrichtung Q breitere Nutkanal 29b in Querrichtung Q nur an einer oder an beiden Seiten von der Nutöffnung 29 weg verläuft.

Zur Verbindung der beiden Gehäuseteile 19 mit dem Verbindungsteil 28 dienen beim Ausführungsbeispiel jeweils ein oder mehrere Verschlusstücke 21, an denen auf der der Nutöffnung 21b der Verschlussnut 21a entgegengesetzten Seite ein Haltevorsprung 30 vorhanden ist, der bei hergestellter Verbindung in eine zugeordnete Längsnut 29 am Verbindungsteil 28 eingreift. Der Haltevorsprung 30 ist im Querschnitt gesehen L-förmig. Er weist einen ersten Steg 30a auf, der mit dem Verbindungsstück 21 verbunden ist. Der erste Steg 30a erstreckt sich quer vom Verbindungsstück 21 weg. Quer und insbesondere rechtwinklig vom ersten Steg 30a ragt ein zweiter Steg 30b auf einer Seite des ersten Stegs 30a weg. Im Übergangsbereich zwischen den beiden Stegen 30a, 30b kann eine Rundung R vorhanden sein, mit der die beiden Stege 30a und 30b ineinander übergehen. Der zweite Steg 30b ist so ausgerichtet, dass er vorzugsweise in Querrichtung Q von der jeweils anderen Längsnut 29 weg nach auβen orientiert ist.

Durch diese Ausgestaltung kann über die mit einem Haltevorsprung 30 versehenen Verschlussstücke 21 eine lösbare Verbindung zwischen dem Gehäuseteil 19 und dem Verbindungsteil 28 hergestellt werden. Hierfür werden zunächst die zweiten Stege 30b durch die Nutöffnung 29a der Längsnut 29 eingesteckt und anschließend wird der Gehäuseteil um eine Schwenkachse geschwenkt, die im Bereich der Nutöffnung 29a der Längsnut 29 in Längsrichtung L verläuft (Figur 3). Bei dieser Schwenkbewegung gelangt der zweite Steg 30b in den Nutkanal 29b der Längsnut 29 und der erste Steg 30a durchsetzt die Nutöffnung 29a der Längsnut 29. Der Gehäuseteil 19 kann dann nicht mehr aus der Längsnut 29 durch die Nutöffnung 29a herausfallen. Zum Lösen der Verbindung wird der Gehäuseteil 19 wieder vom jeweils anderen Gehäuseteil 19 weggeschwenkt, bis der zweite Steg 30b durch die Nutöffnung 29a der Längsnut 29 entnommen werden kann.

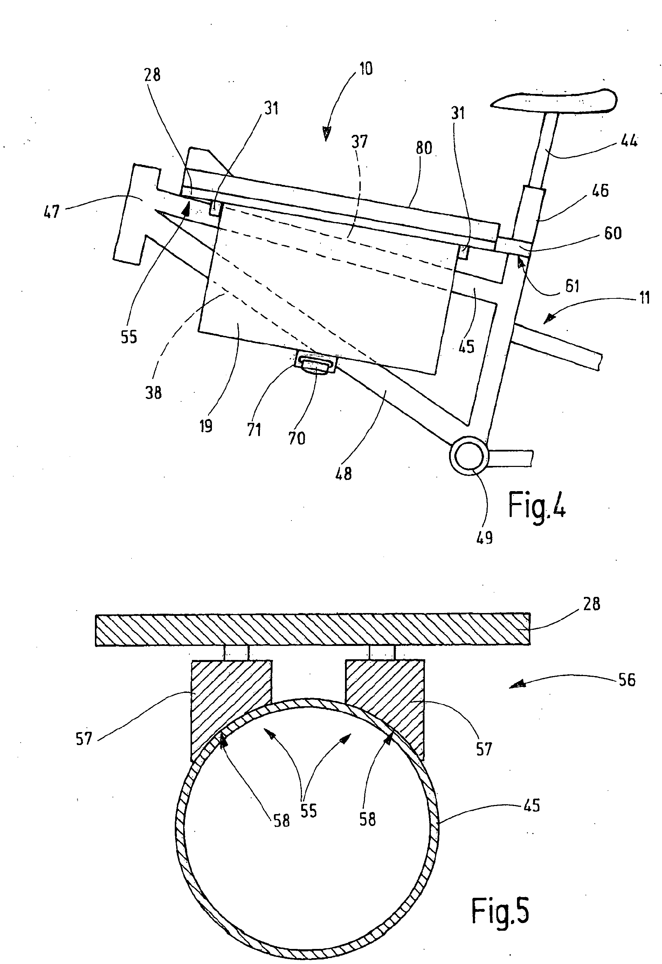

Die Gehäuseteile 19 können in Längsrichtung L in der Längsnut 29 verschiebbar positioniert werden. Um ein versehentliches Verschieben der Gehäuseteile 19 in der betreffenden Längsnut 29 zu vermeiden, kann auf beiden Seiten eines jeweiligen Gehäuseteils 19 jeweils ein Anschlagelement 31 lösbar befestigt werden, wie dies in Figur 4 schematisch dargestellt ist.

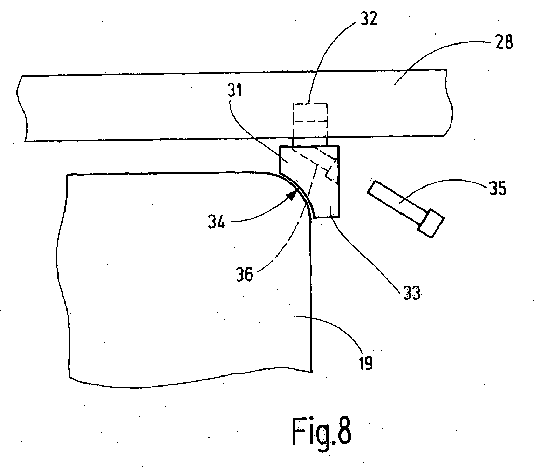

Figur 8 zeigt eine vergrößerte Darstellung eines Anschlagelements 31. Das Anschlagelement 31 wird beim Ausführungsbeispiel über ein Nutstück 32 in die zugeordnete Längsnut 29 eingeführt. Das Nutstück 32 hat im Querschnitt betrachtet vorzugsweise eine L-förmige oder T-förmige Gestalt. Außerhalb der Längsnut 29 weist das Anschlagelement 31 einen Anschlagkörper 33 auf, der zur Sicherung des Gehäuseteils 19 gegen ein Verschieben in Längsrichtung L an diesem anliegt. Vorzugsweise weist der Anschlagkörper 33 hierfür eine konkav gekrümmte Anschlagfläche 34 auf, deren Krümmung in etwa der Krümmung der Ränder 22 in einem Eckbereich entspricht. Die Anschlagfläche 34 beaufschlagt beim Ausführungsbeispiel die beiden Ränder 22 bzw. die Flansche 24 des zugeordneten Gehäuseteils 19. Die Form des Anschlagkörpers 33 ist an die Form des zugeordneten Bereichs des Gehäuseteils 19 angepasst. Über eine Sicherungsschraube 35, die durch ein Sicherungsloch 36 im Anschlagelement 31 hindurch verläuft, wird das Anschlagelement 31 kraftschlüssig gegen ein Verschieben in Längsrichtung L am Verbindungsteil 28 gesichert. Das Sicherungsloch 36 kann hierfür ein Innengewinde aufweisen, in das die Sicherungsschraube 35 eingeschraubt wird. Das freie Ende der Sicherungsschraube 35 kann gegen den Verbindungsteil 28 drücken, so dass sich das Nutstück 32 des Anschlagelements 31 in der Längsnut 29 verspannt.

Über den plattenförmigen Verbindungsteil 28 werden die beiden Gehäuseteile 19 auf Abstand gehalten, so dass zwischen den beiden Gehäuseteilen 19 ein Aufnahmeraum A gebildet ist. Der Aufnahmeraum A dient in am Fahrradrahmen 11 montierten Zustand dazu, Teile des Fahrzeugrahmens 11 und insbesondere einen oder mehrere Rohrabschnitte 37, 38 aufzunehmen. Aufgrund der starren Verbindung der beiden Gehäuseteile 19 durch den Verbindungsteil 28 ist die Breite B des Aufnahmeraums A zumindest im Bereich des Verbindungsteils 28 vor, während und nach der Montage am Fahrradrahmen 11 konstant.

Das Gehäuse 18 ist beim Ausführungsbeispiel symmetrisch zu einer Längsmittelebene ausgeführt. Die Längsmittelebene verläuft in Längsrichtung L mittig durch den Aufnahmeraum A. Die Längsmittelebene ist rechtwinklig zum Verbindungsteil 28 orientiert.

Die Breite B des Aufnahmeraums A ist zumindest so groß wie die Breite des wenigstens einen im Aufnahmeraum A aufzunehmenden Rohrabschnitts 37, 38 des Fahrradrahmens 11. Unter der Breite B ist der Abstand zwischen den beiden Gehäuseteilen 19 zu verstehen. Dieser Abstand wird beim Ausführungsbeispiel rechtwinklig zur Längsmittelebene bzw. rechtwinklig zur Längsrichtung L in Querrichtung Q gemessen.

Beim Ausführungsbeispiel gemäß der Figuren 1 und 2 ist die Breite B aufgrund der Auswölbungen und der Einbuchtungen der beiden Gehäuseteile 19 nicht konstant. Als Breite B wird der minimale Abstand zwischen den beiden Gehäuseteilen 19 verstanden. Die Breite B ist somit definiert als Abstand zweier Ebenen, die leicht geneigt oder parallel zueinander verlaufen und jeweils eine dem Aufnahmeraum A zugewandte Fläche eines Gehäuseteils berühren, ohne diese Fläche zu schneiden, wobei die beiden Ebenen derart angeordnet sind, dass ihr Abstand zueinander maximal wird. Die Breite der Rohrabschnitte 37, 38 wird in Querrichtung Q und bei vertikaler Anordnung des Fahrradrahmens 11 horizontal gemessen.

Der Verbindungsteil 28 ist beispielsgemäß nur an zwei Stellen mit dem Fahrradrahmen 11 verbunden. Der Fahrradrahmen 11 weist beim Ausführungsbeispiel ein oberes Rahmenrohr 45 auf, das mit einem Ende mit einem Sattelstützrohr 46 und mit dem anderen Ende mit einem Lenkerrohr 47 verbunden ist. Das Sattelstützrohr 46 dient zur Aufnahme der den Sattel tragenden Sattelstütze 44 des Fahrrads, das Lenkerrohr 47 bildet die Aufnahme für die Lenkerstütze, an der der Lenker befestigt ist. Unterhalb des oberen Rahmenrohrs 45 ist ein unteres Rahmenrohr 48 vorhanden, das das Lenkerrohr 47 mit einer Tretlageraufnahme 49 verbindet. Mit der Tretlageraufnahme 49 ist auch das Sattelstützrohr 46 verbunden. Alternativ zu der dargestellten Rahmenform könnte das obere Rahmenrohr 45 auch das Sattelstützrohr 46 mit dem unteren Rahmenrohr 48 verbinden, wodurch ein sogenannter Y-Rahmen gebildet ist.

Auf der dem Aufnahmeraum A zugewandten Unterseite weist der Verbindungsteil 28 an einer Abstützstelle 55 eine Abstützeinrichtung 56 auf. Über diese Abstützeinrichtung 56 stützt sich der Verbindungsteil 28 am Fahrradrahmen 11 auf dem oberen Rahmenrohr 45 ab. Die Abstützeinrichtung 56 ist schematisch in Figur 5 veranschaulicht. Beispielsgemäß weist die Abstützeinrichtung zwei Abstützkörper 57 auf, die in Querrichtung Q nebeneinander angeordnet und mit der Unterseite des Verbindungsteils 28 verbunden sind. Die beiden Abstützkörper 57 können beispielsweise eine zylinderähnliche Form aufweisen. Auf ihrer dem oberen Rahmenrohr 45 zugewandten Seite haben die beiden Abschnittskörper 57 jeweils eine Abstützfläche 58, mit der sie am oberen Rahmenrohr 45 anliegen. Die Abstützfläche 58 kann konkav gekrümmt und mithin an die Krümmung des oberen Rahmenrohrs 45 angepasst sein. Alternativ hierzu kann die Abstützfläche 58 bei unbelastetem Abstützkörper 57 auch einen ebenen Verlauf aufweisen. Der Abstützkörper 57 besteht vorzugsweise aus einem elastischen Material, beispielsweise aus Gummi. Die Elastizität des Abschnittskörpers 57 ist dabei so gewählt, dass es sich in Gebrauchslage durch das Gewicht der Energiespeichervorrichtung 10 verformt und daher ganz oder teilweise an die Krümmung des oberen Rahmenrohrs 45 anpasst. Auf diese Weise können dieselben Abstützkörper 57 für unterschiedliche geformte und gekrümmte obere Rahmenrohre 45 verwendet werden. Wie in Figur 5 veranschaulicht, nimmt die Höhe der beiden Abschnittskörper 57 ausgehend von einer Längsmittelebene durch das obere Rahmenrohr 45 betrachtet in Querrichtung Q zu.

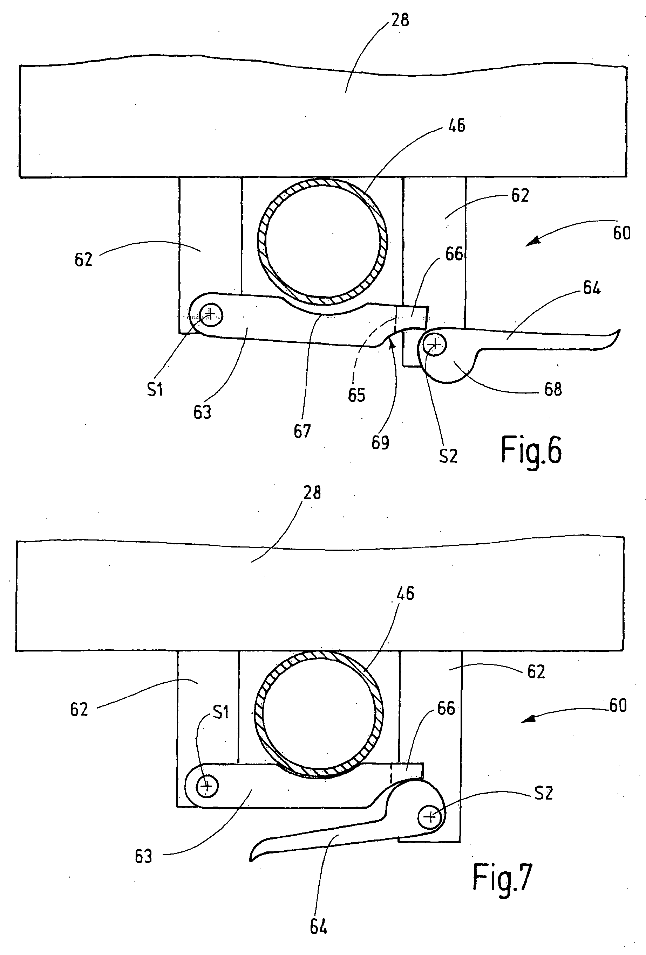

Zusätzlich zu der Abstützstelle 55 ist der Verbindungsteil 28 mit Hilfe einer Befestigungseinrichtung 60 kraft- und/oder formschlüssig oberhalb des oberen Rahmenrohrs 45 lösbar am Fahrradrahmen 11 und insbesondere am Sattelstützrohr 46 und/oder an der Sattelstütze 44 an einer Befestigungsstelle 61 befestigt. Ein Ausführungsbeispiel einer Befestigungseinrichtung 60 ist in den Figuren 6 und 7 veranschaulicht. In Figur 1 ist die Befestigungseinrichtung zur besseren Darstellung anderer Teile des Gehäuses 18 gestrichelt dargestellt.

Die Befestigungseinrichtung 60 weist beim Ausführungsbeispiel zwei Tragteile 62 auf, die an der dem Sattelstützrohr 46 bzw. der Sattelstütze 44 zugeordneten Rückseite an dem Verbindungsteil 28 befestigt sind. Die beiden Tragteile 62 erstrecken sich in Längsrichtung L vom Verbindungsteil 28 weg und sind in Querrichtung Q voneinander beabstandet. Das Sattelstützrohr 46 und/oder die Sattelstütze 44 kann somit zwischen den beiden Tragteilen 62 hindurchragen.

Am freien Ende des einen Tragteils 62 ist ein Schwenkhebel 63 um eine erste Schwenkachse S1 schwenkbar gelagert. Die erste Schwenkachse S1 verläuft quer zur Längsrichtung L und quer zur Querrichtung Q. Am freien Ende des anderen Tragteils 62 ist um eine zweite Schwenkachse S2 ein Klemmhebel 64 schwenkbar gelagert. Die zweite Schwenkachse S2 erstreckt sich parallel zur ersten Schwenkachse S1. An seinem der ersten Schwenkachse S1 entgegengesetzten freien Ende weist der Schwenkhebel 63 eine Aussparung 65 auf, so dass das freie Ende des Schwenkhebels 63 gabelähnlich gestaltet ist und zwei Zinken 66 aufweist, die durch die Aussparung 65 voneinander beabstandet sind. Die Länge des Schwenkhebels 63 ist so gewählt, dass er in seiner Schließstellung den Abstand zwischen den beiden Tragteilen 62 überbrückt, wobei das den Klemmhebel 64 tragende Tragteil 62 in die Aussparung 65 des Schwenkhebels 63 eingreift. Auf der dem Rohr 46 oder 44 zugewandten Seite weist der Schwenkhebel 63 eine Befestigungsfläche 67 auf, die konkav gekrümmt sein kann, um an die Krümmung des zugeordneten Rohrs 46, 44 angepasst zu sein.

Der Klemmhebel 64 weist ein bezüglich der zweiten Schwenkachse S2 exzentrisch angeordnetes Klemmteil 68 auf. Über das exzentrische Klemmteil 68 des Klemmhebels 64 kann eine Klemmfläche 69 am Schwenkhebel 63 beaufschlagt werden. Die Klemmfläche 69 kann einen konkav gekrümmten Verlauf aufweisen. Die Klemmfläche 69 ist im Bereich des freien Endes des Schwenkhebels 63 vorgesehen.

Wird der Schwenkhebel 63 in seine Schließstellung gebracht, in der er mit seiner Befestigungsfläche 67 am Sattelstützrohr 46 bzw. an der Sattelstütze 44 anliegt, so kann anschließend der Klemmhebel 64 um die zweite Schwenkachse S2 geschwenkt werden, wobei sich das exzentrische Klemmteil 68 bei fortgesetzter Schwenkbewegung der Klemmfläche 69 annähert und diese schließlich klemmend beaufschlagt. Dadurch wird eine Klemmkraft zwischen dem exzentrischen Klemmteil 68 und dem freien Ende des Schwenkhebels 63 erzeugt. Dabei verspannt sich die Energiespeichervorrichtung 10 zwischen dem Verbindungsteil 28 und dem Schwenkhebel 63 am Sattelstützrohr 46 bzw. der Sattelstütze 44 und wird an der Befestigungsstelle 61 festgehalten.

Das Lösen der Befestigung der Befestigungseinrichtung 60 erfolgt in umgekehrter Reihenfolge.

Die Energiespeichervorrichtung 10 weist außerdem ein weiteres Befestigungsmittel 70 auf. Das Befestigungsmittel 70 ist beim Ausführungsbeispiel durch ein Band, ein Seil oder ein ähnliches flexibles Zugelement gebildet. Wie in den Figuren 1 bis 3 veranschaulicht, ist beispielsgemäß ein als Klettband ausgeführtes Befestigungsmittel 70 vorgesehen. Das Befestigungsmittel 70 ist mit den dem Verbindungsteil 28 entgegengesetzten unteren Enden der beiden Gehäuseteile 19 verbunden, so dass diese nicht voneinander weggeschwenkt werden können. Dadurch wird verhindert, dass sich ein Gehäuseteil 19 versehentlich vom Verbindungsteil 28 löst.

Zur Befestigung des als Klettband ausgeführtes Befestigungsmittels 70 kann an wenigstens einem Verschlussstück 21 jedes Gehäuseteils 19 ein geschlitzter Vorsprung 71 vorhanden sein, der auf der dem Verbindungsteil 28 entgegengesetzten Seite des Gehäuseteils 19 angeordnet ist. Das Befestigüngsmittel 70 kann durch die beiden Schlitze 72 der beiden Vorsprünge 71 hindurchgeführt und beispielsweise mittels Klettverschluss geschlossen werden. Anstelle des geschlitzten Vorsprungs 71 und des Klettbandes können auch beliebige andere Befestigungsmittel 70 sowie entsprechend angepasste Einrichtungen zum Anbringen des Befestigungsmittels 70 an einem der Verschlussstücke 21 jedes Gehäuseteils 19 vorgesehen werden.

Vorzugsweise wird die Energiespeichervorrichtung 10 so am Fahrradrahmen 11 positioniert, dass das Befestigungsmittel 70 in Kontakt steht mit dem unteren Rahmenrohr 48 des Fahrzeugrahmens 11. Durch diese Maßnahme kann über das Befestigungsmittel 70 und das untere Rahmenrohr 48 eine gewisse Zugkraft auf den Verbindungsteil 28 ausgeübt werden, so dass sich dieser an der Abstützstelle 55 auf das obere Rahmenrohr 45 drückt. Dadurch wird insgesamt ein sehr guter Halt der Energiespeichervorrichtung 10 am Fahrradrahmen 11 erreicht.

In montiertem Zustand erstrecken sich die beiden Gehäuseteile 19 auf beiden Seiten des vom oberen Rahmenrohr 45, dem unteren Rahmenrohr 48 sowie dem Sattelstützrohr 46 gebildeten Rahmendreieck ausgehend vom Verbindungsteil 28 nach unten. Dabei greift kein Gehäuseteil 19 in das Rahmendreieck bzw. in den Bereich zwischen zwei Rahmenrohre 45, 46, 48 ein. In dieser Lage durchsetzen ein erster Rohrabschnitt 37 des oberen Rahmenrohrs 45 sowie ein zweiter Rohrabschnitt 38 des unteren Rahmenrohrs 48 den Aufnahmeraum A zwischen den beiden Gehäuseteilen 19.

Am Gehäuse 18 ist ferner ein elektrischer Anschluss 75 vorhanden, der beim Ausführungsbeispiel durch wenigstens ein elektrisches Anschlusskabel 76 gebildet ist. An jedem Gehäuseteil 19 ist ein elektrisches Anschlusskabel 76 vorgesehen, wobei in Figur 1 lediglich ein Anschluss 75veranschaulicht ist. Die elektrischen Anschlusskabel 76 sind an einer der beiden Stirnseiten des Gehäuses 18 angeordnet. In montiertem Zustand weist die mit den Anschlusskabeln 76 versehene Stirnseite in Fahrtrichtung nach vorne. Der durch die Anschlusskabel 76 gebildete elektrische Anschluss 75 dient zum elektrischen Verbinden des wenigstens einen Energiespeichers 12 mit einem elektrischen Verbraucher, beispielsweise mit der Steuereinheit eines elektrischen Antriebs, oder mit einem Ladegerät zum Wiederaufladen des elektrischen Energiespeichers 12. Sind mehrere separate Energiespeicher 12, beispielsweise Akkumulatorzellen 13, im Gehäuse 18 angeordnet, so können diese parallel oder in Reihe zueinander geschaltet sein. Es ist auch möglich, jeweils einen Teil der elektrischen Energiespeicher 12 parallel in diese Parallelschaltungen in Reihe zueinander zu schalten oder mehrere Reihenschaltungen von Energiespeichern 12 parallel zueinander zu schalten, so dass Mischformen von Reihen- und Parallelschaltung erhalten werden.

In Abwandlung zum dargestellten Ausführungsbeispiel können im Gehäuse 18 neben dem wenigstens einen wiederaufladbaren elektrischen Energiespeicher 12 auch elektrische und/oder elektronische Bauteile angeordnet sein. Beispielsweise können auch elektrische und/oder elektronische, gesteuerte Schalter 41 vorgesehen sein, um die elektrische Schaltung der Energiespeicher 12 bzw. der Akkumulatorzellen 13 zu ändern, die über den Anschluss 75 abgreifbar ist.

Die Steuereinheit zur Steuerung eines elektrischen Fahrradantriebes ist beim Ausführungsbeispiel in einem Gehäuse 80 angeordnet, das in den Figuren 1 und 4 schematisch veranschaulicht ist. Das Gehäuse 80 sitzt auf der dem Aufnahmeraum A abgewandten Oberseite des Verbindungsteils 28. Innerhalb des Gehäuses 80 können verschiedene elektrische und/oder elektronische Komponenten zur Antriebssteuerung des elektrischen Fahrradantriebs angeordnet sein. Außerdem kann das Gehäuse 80 eine Anzeige 81 und/oder wenigstens ein Bedienelement 82 aufweisen. Über das Bedienelement 82 kann beispielsweise der elektrische Antrieb ein- und ausgeschaltet werden. Die Anzeige 81 kann den Fahrer über aktuelle Daten informieren, beispielsweise über den Ladezustand der Energiespeicher 12, über die aktuelle Antriebsleistung des elektrischen Antriebs, die voraussichtlich verbleibende Verfügbarkeitsdauer elektrischer Energie, die voraussichtliche Reichweite, oder ähnliches. Die Anzeige 81 bzw. das oder die Bedienelemente 82 können zum Beispiel in einer den Fahrer zugewandten schrägen Fläche des Gehäuses 80 angeordnet sein. Auf der dem Verbindungsteil 28 entgegengesetzten Oberseite des Gehäuses 80 kann auch eine Polsterung vorgesehen werden, um den Fahrer vor Verletzungen zu schützen und/oder alternativ zum Sattel eine weitere Sitzposition zu schaffen.

Die Energiespeichervorrichtung 10 kann außerdem eine Trageinrichtung 85 zur Vereinfachung der Handhabung aufweisen, beispielsweise um die Energiespeichervorrichtung 10 zum Anbringen oder Abnehmen am Fahrrad mit einer Hand ergreifen zu können bzw. zum Tragen der Energiespeichervorrichtung 10 (Figur 1). Die Trageinrichtung kann einen oder mehrere Griffe 86 aufweisen. Der wenigstens eine Griff 86 ist vorzugsweise am Gehäuse 80 befestigt. Er kann umklappbar oder abnehmbar am Gehäuse 80 angebracht sein. Der wenigstens eine Griff 86 kann als starrer Körper 86a oder als flexible Lasche 86b ausgeführt sein. Es ist möglich, einen Griff 86 entlang der Mittellängsebene am Gehäuse 80 oder auf beiden Seiten dieser Mittellängsebene zwei Griffe 86 vorzusehen, die sich gemeinsam mit einer Hand ergreifen lassen.

Die Erfindung betrifft eine Energiespeichervorrichtung 10 mit mehreren als Akkumulatorzellen 13 ausgeführten wiederaufladbaren elektrischen Energiespeichern 12 zur werkzeuglosen, lösbaren Befestigung an einem Fahrradrahmen 11. Über die Energiespeicher 12 wird ein elektrischer Antrieb bzw. Hilfsantrieb des Fahrrads mit elektrischer Energie versorgt. Die elektrischen Energiespeicher 12 sind in einem Gehäuse 18 angeordnet. Das Gehäuse 18 weist zwei vollständig geschlossene Gehäuseteile 19 auf, wobei die eine Hälfe der Energiespeicher 12 in dem einen Gehäuseteil 19 und die andere Hälfte der Energiespeicher 12 in dem anderen Gehäuseteil 19 angeordnet sind. Alle Energiespeicher 12 sind identisch. Die beiden Gehäuseteile sind mit Abstand zueinander starr über ein Verbindungsteil 28 des Gehäuses 18 verbunden, so dass zwischen den beiden Gehäuseteilen 19 angrenzend an den Verbindungsteil 28 ein Aufnahmeraum A gebildet ist. Zur Montage wird das Gehäuse 18 über ein Rahmenrohr 45 des Fahrradrahmens 11 gesteckt, so dass ein oder vorzugsweise zwei Rahmenrohrabschnitte 37, 38 den Aufnahmeraum A durchsetzten und die Energiespeicheranordnung 10 dadurch am Fahrradrahmen 11 gelagert ist. Die beiden Gehäuseteile greifen dabei nicht in den Raum zwischen zwei Rähmenrohren 45, 46, 48 des Fahrradrahmens 11 ein.

### Bezugszeichenliste:

- 10: Energiespeichervorrichtung
- 11: Fahrradrahmen
- 12: Energiespeicher
- 13: Akkumulatorzelle

- 18: Gehäuse
- 19: Gehäuseteil
- 20: Gehäuseschale
- 21: Verschlussstück
- 21a: Verschlussnut
- 21b: Nutöffnung
- 21c: Nutkanal
- 22: Rand
- 23: Anlagefläche
- 24: Flansch
- 25: Schließelement
- 26: Kammer

- 28: Verbindungsteil
- 29: Längsnut
- 29a: Nutöffnung
- 29b: Nutkanal
- 30: Haltevorsprung
- 30a: erster Steg
- 30b: zweiter Steg
- 31: Anschlagelement
- 32: Nutstück
- 33: Auflagefläche
- 34: Anschlagfläche
- 35: Sicherungsschraube
- 36: Sicherungsloch
- 37: Rohrabschnitt
- 38: Rohrabschnitt

- 44: Sattelstütze
- 45: oberes Rahmenrohr
- 46: Sattelstützrohr
- 47: Lenkerrohr
- 48: unteres Rahmenrohr
- 49: Tretlageraufnahme
- 55: Abstützstelle
- 56: Abstützeinrichtung
- 57: Abstützkörper
- 58: Abstützfläche

- 60: Befestigungseinrichtung
- 61: Befestigungsstelle
- 62: Tragteil
- 63: Schwenkhebel
- 64: Klemmhebel
- 65: Aussparung
- 66: Zinken
- 67: Befestigungsfläche
- 68: Klemmteil
- 69: Klemmfläche
- 70: Befestigungsmittel

- 75: elektrischer Anschluss
- 76: Anschlusskabel

- 80: Gehäuse
- 81: Anzeige
- 82: Bedienelement

- 85: Trageinrichtung
- 86: Griff
- A: Aufnahmeraum
- B: Breite des Aufnahmeraums
- L: Längsrichtung
- Q: Querrichtung
- R: Rundung
- S1: erste Schwenkachse
- S2: zweite Schwenkachse
- V: Verbindungsebene

## Patentansprüche

1. Energiespeichervorrichtung (10) zur Befestigung an einem Fahrradrahmen (11),
mit einem Gehäuse (18), in dem wenigstens ein Energiespeicher (12) zur Bereitstellung von elektrischer Energie angeordnet ist,
mit wenigstens einem am Gehäuse (18) vorhandenen und von außen zugänglichen elektrischen Anschluss (75), an den ein elektrischer Verbraucher anschließbar ist,
wobei das Gehäuse (18) zwei Gehäuseteile (19) aufweist, die über einen starren Verbindungsteil (28) miteinander verbunden sind,
wobei zwischen den beiden Gehäuseteilen (19) ein Aufnahmeraum (A) vorhanden ist, der zur Aufnahme von wenigstens einem Rohrabschnitt (37, 38) eines Rahmenrohrs (45, 48) des Fahrradrahmens (11) dient,
wobei die Breite (B) des Aufnahmeraums (A) zumindest so groß ist, wie die Breite des aufzunehmenden Rohrabschnitts (37, 38),
wobei die Breite (B) des Aufnahmeraums (A) dem Abstand zwischen den beiden Gehäuseteilen (19) entspricht, rechtwinklig zu einer Längsmittelebene in eine Querrichtung (Q) betrachtet,
und wobei aufgrund der starren Verbindung der beiden Gehäuseteile (19) durch den Verbindungsteil (28) die Breite (B) des Aufnahmeraums (A) im Bereich des Verbindungsteils (28) vor, während und nach der Montage am Fahrradrahmen (11) konstant ist.

2. Energiespeichervorrichtung (10) nach Anspruch 1,
**dadurch gekennzeichnet, dass** die beiden Gehäuseteile (19) eine identische Form und/oder eine identische Größe aufweisen.

3. Energiespeichervorrichtung (10) nach einem der vorhergehenden Ansprüche,
**dadurch gekennzeichnet, dass** das Gehäuse (18) bezüglich einer Längsmittelebene symmetrisch ausgeführt ist.

4. Energiespeichervorrichtung (10) nach einem der vorhergehenden Ansprüche,
**dadurch gekennzeichnet, dass** in jedem Gehäuseteil (19) mehrere Energiespeicher (12) angeordnet sind.

5. Energiespeichervorrichtung (10) nach einem der vorhergehenden Ansprüche,
**dadurch gekennzeichnet, dass** der Aufnahmeraum (A) dazu eingerichtet ist, zwei mit Vertikalabstand zueinander angeordnete Rohrabschnitte (37, 38) aufzunehmen.

6. Energiespeichervorrichtung (10) nach einem der vorhergehenden Ansprüche,
**dadurch gekennzeichnet, dass** jeder Gehäuseteil (19) zwei miteinander verbundene Gehäuseschalen (20) aufweist.

7. Energiespeichervorrichtung (10) nach Anspruch 6,
**dadurch gekennzeichnet, dass** jede Gehäuseschale (20) einen ringsumlaufenden Rand (22) mit einer Anlagefläche (23) aufweist, wobei die beiden ein Gehäuseteil (19) bildenden Gehäuseschalen (20) an den einander zugewandten Anlageflächen (23) aneinander anliegen.

8. Energiespeichervorrichtung (10) nach Anspruch 7,
**dadurch gekennzeichnet, dass** am Rand (22) auf der der Anlagefläche (23) entgegen gesetzten Seite abschnittsweise ein Flansch (24) vorhanden ist.

9. Energiespeichervorrichtung (10) nach einem der Ansprüche 6 bis 8,
**dadurch gekennzeichnet, dass** die beiden Gehäuseschalen (20) über mehrere Verschlussstücke (21) aneinander befestigt sind.

10. Energiespeichervorrichtung (10) nach Anspruch 9,
**dadurch gekennzeichnet, dass** jedes Verschlussstück (21) eine Verschlussnut (21a) aufweist, deren Nutöffnung (21b) schmaler ist als der sich daran anschlieβende Nutkanal (21c), in dem die beiden Flansche (24) der beiden Gehäuseschalen (20) bei hergestellter Verbindung angeordnet sind.

11. Energiespeichervorrichtung (10) nach Anspruch 9 oder 10,
**dadurch gekennzeichnet, dass** der Verbindungsteil (28) zwei parallel zueinander in Längsrichtung (L) verlaufende Längsnuten (29) aufweist, die jeweils eine Nutöffnung (29a) aufweisen, die schmaler ist als der sich daran anschließende Nutkanal (29b).

12. Energiespeichervorrichtung (10) nach Anspruch 11,
**dadurch gekennzeichnet, dass** an wenigstens einem Verschlussstück (21) auf der dem Gehäuseteil (19) abgewandten Seite ein Haltevorsprung (30) vorhanden ist, der bei hergestellter Verbindung mit dem Verbindungsteil (28) in eine der Längsnuten (29) eingreift.

13. Energiespeichervorrichtung (10) nach Anspruch 12,
**dadurch gekennzeichnet, dass** der Haltevorsprung (30) einen mit dem Verschlusstück (21) verbundenen ersten Steg (30a) und einen auf lediglich einer Seite vom ersten Steg (30a) weg ragenden zweiten Steg (30b) aufweist.

14. Energiespeichervorrichtung (10) nach einem der vorhergehenden Ansprüche,
**dadurch gekennzeichnet, dass** der Verbindungsteil (28) an zwei Stellen (55, 61) mit dem Fahrrad verbunden ist.

15. Energiespeichervorrichtung (10) nach einem der vorhergehenden Ansprüche,
**dadurch gekennzeichnet, dass** der Verbindungsteil (28) eine Abstützeinrichtung (56) aufweist, mit der sich der Verbindungsteil (28) auf einem Rahmenrohr (45) des Fahrradrahmens (11) abstützt.

16. Energiespeichervorrichtung (10) nach einem der vorhergehenden Ansprüche,
**dadurch gekennzeichnet, dass** der Verbindungsteil (28) eine Befestigungseinrichtung (60) aufweist, die dazu eingerichtet ist, den Verbindungsteil (28) an einem Sattelstützrohr (46) und/oder an einer im Sattelstützrohr (46) aufgenommenen Sattelstütze (44) zu befestigen.

## Claims

1. Energy storage device (10) for attachment to a bicycle frame (11),
with a housing (18), arranged in which is at least one energy storage unit (12) to provide electrical energy,
with at least one electrical connection (75) which is present on the housing (18) and is accessible from the outside, and to which an electrical consumer can be connected,
wherein the housing (18) has two housing parts (19) which are connected to one another via a rigid connecting piece (28),
wherein provided between the two housing parts (19) is a mounting space (A) which serves to accommodate at least one tube section (37, 38) of a frame tube (45, 48) of the bicycle frame (11),
wherein the width (B) of the mounting space (A) is at least as large as the width of the tube section (37, 38) that is to be accommodated,
wherein the width (B) of the mounting space (A) corresponds to the distance between the two housing parts (19), as viewed perpendicular to a longitudinal central plane in a transverse direction (Q),
and wherein on account of the rigid connection of the two housing parts (19) via the connecting piece (28), the width (B) of the mounting space (A) in the area of the connecting piece (28) is constant before, during and after attachment to the bicycle frame (11).

2. Energy storage device (10) according to claim 1,
**characterised in that** the two housing parts (19) have an identical shape and/or an identical size.

3. Energy storage device (10) according to one of the preceding claims,
**characterised in that** the housing (18) is designed to be symmetrical in relation to a longitudinal central plane.

4. Energy storage device (10) according to one of the preceding claims,
**characterised in that** several energy storage devices (12) are arranged in each housing section (19).

5. Energy storage device (10) according to one of the preceding claims,
**characterised in that** the mounting space (A) is designed to accommodate two tube sections (37, 38) arranged at a vertical distance from one another.

6. Energy storage device (10) according to one of the preceding claims,
**characterised in that** each housing section (19) has two housing shells (20) that are connected to one another.

7. Energy storage device (10) according to claim 6,
**characterised in that** each housing shell (20) has a rim (22) running all round, with a contact surface (23), wherein the two housing shells (20) forming a housing section (19) rest against one another at the contact surfaces (23) facing one another.

8. Energy storage device (10) according to claim 7,
**characterised in that** a flange (24) is present in sections on the rim (22), on the side opposite the contact surface (23).

9. Energy storage device (10) according to one of the claims 6 to 8,
**characterised in that** the two housing shells (20) are fastened to one another by means of several locking pieces (21).

10. Energy storage device (10) according to claim 9,
**characterised in that** each locking piece (21) has a locking groove (21a), the groove opening (21b) of which is narrower than the adjoining groove channel (21c), in which the two flanges (24) of the two housing shells (20) are deployed when the connection is effected.

11. Energy storage device (10) according to claim 9 or 10,
**characterised in that** the connecting piece (28) has two longitudinal grooves (29) running parallel to one another in the longitudinal direction (L), each of which has a groove opening (29a) that is narrower than the adjoining groove channel (29b).

12. Energy storage device (10) according to claim 11,
**characterised in that** on at least one locking piece (21) on the side facing away from the housing section (19), there is a holding lug (30) which, when a connection is effected with the connecting piece (28), engages into one of the longitudinal grooves (29).

13. Energy storage device (10) according to claim 12,
**characterised in that** the holding lug (30) has a first web (30a) connected to the locking piece (21) and a second web (30b) projecting away from the first web (30a) only on one side.

14. Energy storage device (10) according to one of the preceding claims,
**characterised in that** the connecting piece (28) is connected to the bicycle at two points (55, 61).

15. Energy storage device (10) according to one of the preceding claims,
**characterised in that** the connecting piece (28) has a supporting means (56) by which the connecting piece (28) is supported on a frame tube (45) of the bicycle frame (11).

16. Energy storage device (10) according to one of the preceding claims,
**characterised in that** the connecting piece (28) has an attachment means (60) which is equipped to fasten the connecting piece (28) to a saddle-support tube (46) and/or to a saddle support (44) that is accommodated in the saddle-support tube (46).

## Revendications

1. Dispositif de stockage d'énergie (10) à fixer sur un cadre de bicyclette (11), comprenant un boîtier (18) dans lequel est disposé au moins un moyen de stockage d'énergie (12) destiné à fournir de l'énergie électrique, comprenant au moins un raccord électrique (75) qui est disposé sur le boîtier (18) et est accessible de l'extérieur et auquel un organe utilisateur électrique peut être raccordé, le boîtier (18) comportant deux parties de boîtier (19) qui sont reliées entre elles par l'intermédiaire d'une partie de liaison rigide (28), entre les deux parties de boîtier (19) étant ménagé un espace récepteur (A) qui sert à recevoir au moins une portion tubulaire (37, 38) d'un tube de cadre (45, 48) du cadre de bicyclette (11), la largeur (B) de l'espace récepteur (A) étant au moins égale à la largeur de la portion tubulaire (37, 38) à recevoir, la largeur (B) de l'espace récepteur (A) correspondant à la distance entre les deux parties de boîtier (19) vue dans une direction transversale (Q) perpendiculairement à un plan médian longitudinal, et, en raison de la liaison rigide des deux parties de boîtier (19) par l'intermédiaire de la partie de liaison (28), la largeur (B) de l'espace récepteur (A) dans la zone de la partie de liaison (28) étant constante avant, pendant et après la pose sur le cadre de bicyclette (11).

2. Dispositif de stockage d'énergie (10) selon la revendication 1, **caractérisé en ce que** les deux parties de boîtier (19) présentent une forme identique et/ou une dimension identique.

3. Dispositif de stockage d'énergie (10) selon une des revendications précédentes, **caractérisé en ce que** le boîtier (18) est réalisé symétriquement par rapport à un plan médian longitudinal.

4. Dispositif de stockage d'énergie (10) selon une des revendications précédentes, **caractérisé en ce que** dans chaque partie de boîtier (19) sont disposés plusieurs moyens de stockage d'énergie (12).

5. Dispositif de stockage d'énergie (10) selon une des revendications précédentes, **caractérisé en ce que** l'espace récepteur (A) est conçu pour recevoir deux portions tubulaires (37, 38) disposées avec une distance verticale l'une par rapport à l'autre.

6. Dispositif de stockage d'énergie 10) selon une des revendications précédentes, **caractérisé en ce que** chaque partie de boîtier (19) comporte deux coques de boîtier (20) reliées entre elles.

7. Dispositif de stockage d'énergie (10) selon la revendication 6, **caractérisé en ce que** chaque coque de boîtier (20) comporte un bord périphérique (22) pourvu d'une surface d'application (23), les deux coques de boîtier (20) qui forment une partie de boîtier (19) étant appliquées l'une contre l'autre au niveau des surfaces d'application (23) tournées l'une vers l'autre.

8. Dispositif de stockage d'énergie (10) selon la revendication 7, **caractérisé en ce que** sur le bord (22), du côté situé à l'opposé de la surface d'application (23), est disposée par endroits une aile (24).

9. Dispositif de stockage d'énergie (10) selon une des revendications 6 à 8, **caractérisé en ce que** les deux coques de boîtier (20) sont fixées l'une à l'autre par l'intermédiaire de plusieurs pièces de fermeture (21).

10. Dispositif de stockage d'énergie (10) selon la revendication 9, **caractérisé en ce que** chaque pièce de fermeture (21) comporte une rainure de fermeture (21a) dont l'ouverture de rainure (21b) est plus étroite que le canal de rainure (21c) qui s'y raccorde et dans lequel les deux ailes (24) des deux coques de boîtier (20) sont disposées lorsque la liaison est réalisée.

11. Dispositif de stockage d'énergie (10) selon la revendication 9 ou 10, **caractérisé en ce que** la partie de liaison (28) est pourvue de deux rainures longitudinales (29) qui s'étendent parallèlement l'une à l'autre dans la direction longitudinale (L) et qui sont pourvues chacune d'une ouverture de rainure (29a) qui est plus étroite que le canal de rainure (29b) qui s'y raccorde.

12. Dispositif de stockage d'énergie (10) selon la revendication 11, **caractérisé en ce que** sur au moins une pièce de fermeture (21) est prévue, du côté opposé à la partie de boîtier (19), une saillie de retenue (30) qui, lorsque la liaison avec la partie de liaison (28) est réalisée, pénètre dans une des rainures longitudinales (29).

13. Dispositif de stockage d'énergie (10) selon la revendication 12, **caractérisé en ce que** la saillie de retenue (30) comporte un premier rebord (30a) relié à la pièce de fermeture (21) et un second rebord (30b) qui ne s'écarte du premier rebord (30a) que d'un seul côté.

14. Dispositif de stockage d'énergie (10) selon une des revendications précédentes, **caractérisé en ce que** la partie de liaison (28) est reliée à la bicyclette en deux endroits (55, 61).

15. Dispositif de stockage d'énergie (10) selon une des revendications précédentes, **caractérisé en ce que** la partie de liaison (28) comporte un dispositif d'appui (56) avec lequel la partie de liaison (28) prend appui sur le tube de cadre (45) du cadre de bicyclette (11).

16. Dispositif de stockage d'énergie (10) selon une des revendications précédentes, **caractérisé en ce que** la partie de liaison (28) comporte un dispositif de fixation (60) qui est conçu pour fixer la partie de liaison (28) à un tube de selle (46) et/ou à une tige de selle (44) reçue dans le tube de selle (46).
